# EUROPÄISCHE PATENTSCHRIFT

(11) **EP 2 989 310 B1**
(45) Veröffentlichungstag und Bekanntmachung des Hinweises auf die Patenterteilung: **31.03.2021**
(21) Anmeldenummer: 14724378.6
(22) Anmeldetag: 06.05.2014
(51) Int. Cl.: F02C 7/08, F02C 6/14

(54) **GASTURBINEN GEKOPPELTES SPEICHERSYSTEM ZUR ANSAUGFLUIDVORWÄRMUNG**
ACCUMULATOR SYSTEM COUPLED TO GAS TURBINES FOR INTAKE FLUID PREHEATING
SYSTÈME DE STOCKAGE COUPLÉ À DES TURBINES À GAZ POUR PRÉCHAUFFER UN FLUIDE D'ADMISSION

(30) Priorität: 05.06.2013 DE 102013210431
(43) Veröffentlichungstag der Anmeldung: 02.03.2016
(73) Patentinhaber: Siemens Energy Global GmbH & Co. KG, 81739 München (DE)
(72) Erfinder: BRUNHUBER, Christian, 91275 Auerbach (DE); STROBELT, Frank, 90419 Nürnberg (DE); ZIMMERMANN, Gerhard, 91315 Höchstadt/Aisch (DE)
(86) Internationale Anmeldenummer: PCT/EP2014/059213
(87) Internationale Veröffentlichungsnummer: WO 2014/195075

(56) Entgegenhaltungen:
- EP-A1- 1 577 548
- CA-A1- 2 850 241
- JP-A- H1 089 798
- US-A1- 2010 146 976
- US-A1- 2010 146 981

## Beschreibung

Die vorliegende Erfindung betrifft ein Gasturbinen gekoppeltes Speichersystem zur Speicherung von thermischer Energie in einem Wärmespeicher zur Vorwärmung eines an eine Ansaugseite einer Gasturbine geführten Fluids sowie ein Verfahren zum Betreiben eines solchen Speichersystems.

Ein solches mit einer Gasturbine gekoppeltes Speichersystem ist etwa aus der US 2011/0094236 A1 bekannt. Darin wird vorgeschlagen, bei vorhandenem Überschussstrom Verdichterluft in einer Kaverne zu speichern. Vor dem Speichervorgang in der Kaverne wird der Verdichterluft Wärme entzogen, um diese Wärme danach der Verdichterluft erneut zuzuführen, wenn diese aus der Kaverne entnommen und einer Brennkammer einer Gasturbine zugeführt wird.

Weiterhin ist in der US 2010/0146981 A1 eine Verschaltung einer Gasturbine gelehrt, welche die Einsaugluft einer Gasturbine mit Hilfe eines Wärmetauschers thermisch zu höheren und zu niedrigeren Temperaturen konditionieren kann. Hierbei kann der Wärmetauscher mit thermisch konditioniertem Wasser beschickt werden, welches auch aus einem Kältetank zu Kühlzwecken entnommen werden kann.

Aufgrund des zunehmenden Anteils von elektrischer Energie aus fluktuierenden erneuerbaren Energiequellen in den öffentlichen Stromversorgungsnetzwerken werden Gaskraftwerke bzw. kombinierte Gas- und Dampfkraftwerke zunehmend nur als Reservekraftwerke bzw. zur Netzwerkstabilisierung benutzt. Diese Kraftwerke werden insbesondere zu Zeiten geringerer Energiebereitstellung durch die erneuerbaren Energiequellen betrieben, um die elektrische Energieversorgung sicherzustellen. Aufgrund dieser sich zunehmend verstärkenden Entwicklung werden diese Kraftwerke vermehrt in Teillast betrieben, also in einem Lastzustand, für welchen die Kraftwerke meistens nicht optimal ausgelegt sind. Aufgrund der nicht optimalen technischen Auslegung von Gasturbinen ist der auf den Brennstoff bezogene Wirkungsgrad im Teillastbetrieb geringer als bei Volllast.

Wegen dieses Nachteils ist es wünschenswert, Gasturbinen hinsichtlich ihrer Flexibilität soweit zu verbessern, dass der Teillastwirkungsgrad bezogen auf den Brennstoffverbrauch erhöht wird. Eine solche Flexibilisierungsmaßnahme soll auch ermöglichen, die Gasturbine bei Bedarf über geringere Anfahrzeiten schneller anzufahren. Hierbei ist zu berücksichtigen, dass während des Anfahrbetriebs die Gasturbine ebenfalls über einen begrenzten Zeitraum in Teillast betrieben werden muss, bevor sie in dem hinsichtlich des Wirkungsgrades vorteilhaften Volllastzustand gefahren werden kann. Eine Teillastbetriebsverbesserung soll zudem aber, soweit wie möglich, energieeffizient vorgenommen werden, ohne hierbei ausschließlich wertvolle Primärenergie einzusetzen.

Weiterhin stellt es sich als wünschenswert dar, bereits bestehende Gasturbinen durch einfache bauliche Änderungen für einen solchen, verbessert flexiblen Betrieb zu rüsten.

Aufgabe der vorliegenden Erfindung ist es also, ein Gasturbinensystem vorzuschlagen, welches einen verbesserten Teillastbetrieb erlaubt.

Erfindungsgemäß werden diese der Erfindung zugrunde liegenden Aufgaben durch eine Gasturbine mit einem gekoppelten Speichersystem gemäß Anspruch 1 sowie durch ein Verfahren zum Betrieb eines solchen Speichersystems gemäß Anspruch 6 gelöst.

Insbesondere werden diese der Erfindung zugrundeliegenden Aufgaben gelöst durch ein Gasturbinen gekoppeltes Speichersystem zur Speicherung thermischer Energie in einem Wärmespeicher, mit einer Ladeschaltung und einer Entladeschaltung, wobei die Ladeschaltung mit einer elektrisch betriebenen Wärmeerzeugungseinrichtung versehen ist, die dazu ausgebildet ist, Wärme unter Nutzung von elektrischer Energie zu erzeugen, und wobei die Ladeschaltung dazu ausgebildet ist, diese Wärme wenigstens teilweise an den Wärmespeicher zu überführen, um sie darin zu speichern, und wobei die Entladeschaltung dazu ausgebildet ist, mittels der Wärme aus dem Wärmespeicher ein Fluid thermisch zu konditionieren, um dieses dann an die Ansaugseite eines Verdichters einer Gasturbine zu führen, und wobei die Ladeschaltung eine Wärmepumpe als Wärmeerzeugungseinrichtung aufweist.

Weiter werden diese der Erfindung zugrundeliegenden Aufgaben gelöst durch ein Verfahren zum Betrieb eines solchen vorab, wie auch nachfolgend beschriebenen Speichersystems, welches folgende Schritte umfasst:
- Betreiben der Wärmeerzeugungseinrichtung zur Erzeugung von Wärme und Überführen dieser Wärme wenigstens teilweise mittels der Ladeschaltung an den Wärmespeicher;
- Zwischenspeichern der Wärme in dem Wärmespeicher;
- Überführen von mittels der Wärme aus dem Wärmespeicher thermisch konditioniertem Fluid an die Ansaugseite des Verdichters der Gasturbine.

Erfindungsgemäß sieht das Gasturbinen gekoppelte Speichersystem somit einen Wärmespeicher vor, welcher mit Hilfe einer Ladeschaltung mit thermischer Energie geladen werden kann. Die thermische Energie stammt hierbei aus einer elektrisch betriebenen Wärmeerzeugungseinrichtung. Der elektrische Betrieb der Wärmeerzeugungseinrichtung erweist sich hierbei insofern als besonders vorteilhaft, da während des Ladens bzw. Entladens des Wärmespeichers keine Energie aus einem thermischen Kraftwerkskreislauf entnommen werden muss, wodurch beispielsweise in einem Kraftwerk der Energieerzeugungswirkungsgrad nachteilig beeinflusst werden könnte. Vielmehr erzeugt die Wärmeerzeugungseinrichtung thermische Energie durch Umsetzung von elektrischer Energie, welche anschließend mit Hilfe des Wärmespeichers zeitlich zwischengespeichert werden kann, um sie bei Bedarf zu einem späteren Zeitpunkt nutzen zu können. Hierbei erweist es sich als besonders vorteilhaft, insbesondere zu einem Zeitpunkt elektrische Energie in Wärme umzusetzen, wenn etwa solche im Übermaß etwa bei Vorherrschen von einem Überangebot an elektrischer Energie in den Stromversorgungsnetzwerken vorliegt.

Die in dem Wärmespeicher zwischengespeicherte thermische Energie kann nun mittels der Entladeschaltung auf ein Fluid übertragen werden, welches anschließend an die Ansaugseite des Verdichters der Gasturbine geführt wird. Aufgrund dieser Vorwärmung des in den Verdichter der Gasturbine eingeführten Fluids kann infolge die Feuerungstemperatur in der Gasturbine erhöht werden, wodurch ebenfalls eine höhere Nutzenergieausbeute zu erwarten steht. So lässt beispielsweise die Entspannung von Abgas bei einer höheren Temperatur in der Expansionsturbine bei unverändertem Brennstoffverbrauch eine erhöhte Arbeitsleistung erwarten. Umgekehrt kann bei gleicher Leistung Brennstoff zur Verfeuerung in der Gasturbine eingespart werden. Wird zudem die thermische Energie des aus der Gasturbine nach der Verbrennung austretenden Abgases in einem weiteren thermischen Prozess genutzt, kann auch dieser bei höherem Wirkungsgrad betrieben werden. So kann beispielsweise der Betrieb eines mit der Gasturbine gekoppelten Dampfteils eines gekoppelten Gas- und Dampfkraftwerks bei erhöhtem Wirkungsgrad erfolgen.

Erfindungsgemäß ist weiter vorgesehen, dass die Ladeschaltung eine Wärmepumpe als Wärmeerzeugungseinrichtung aufweist. Diese Wärmepumpe ist insbesondere dazu ausgebildet, dass sie mit einer Wärmezuleitung für Niedertemperaturwärmeströme versehen ist, um einen Wärmestrom, der im Niedertemperaturbereich liegt, hinsichtlich seines Wärmegehalts zu konditionieren. Derartige Niedertemperaturwärmeströme können bspw. aus Fernwärmenetzwerken bzw. aus Abwärmeleitungen einer Industrieanlage entnommen werden. Die Wärmepumpe erhöht hierbei durch zusätzliche Umsetzung von elektrischer Energie in thermische Energie den Wärmeinhalt des bereits vorhandenen Niedertemperaturwärmestroms signifikant. Derartige Wärmepumpen zeichnen sich typischerweise durch einen hohen COP-Wert (Coefficient of Performance) aus, der bei mindestens 1,5 liegt. Bei Betrieb einer solchen Wärmepumpe fällt eine energiebezogene Brennstoffeinsparung durch die Fluidvorwärmung höher aus, als es nur die elektrisch umgesetzte Energie ermöglichen könnte. In anderen Worten wird die Niedertemperaturwärme mittels der Wärmepumpe zusätzlich zur umgesetzten elektrischen Energie noch für die thermische Konditionierung des an die Gasturbine geführten Fluids vorteilhaft genutzt.

Niedertemperaturwärme soll vorliegend all diejenigen Wärmequellen betreffen, die ein Temperaturniveau von nicht mehr als 150 °C aufweisen.

An dieser Stelle sei darauf hingewiesen, dass das an die Ansaugseite des Verdichters der Gasturbine geführte Fluid bevorzugt als Luft ausgebildet ist. Dieses Fluid kann jedoch etwa aber auch als ein Abgas ausgebildet sein, welches zur Nachverbrennung vorgesehen sein kann. Weitere für eine Verbrennung in einer Gasturbine geeignete Stoffe, können ebenfalls mit von dem Fluid umfasst sein.

Gemäß einer ersten besonders bevorzugten Ausführungsform der Erfindung ist vorgesehen, dass die Entladeschaltung dazu ausgebildet ist, das Fluid durch den Wärmespeicher zur thermischen Konditionierung zu führen. Alternativ oder auch zusätzlich kann die Ladeschaltung auch dazu ausgebildet sein, ein Arbeitsfluid, welches mit dem an die Gasturbine geführten Fluid identisch sein kann, durch den Wärmespeicher zur Wärmeentnahme zu führen. Das Arbeitsfluid könnte anschließend mit Hilfe eines geeigneten Wärmetauschers diese aufgenommene Wärme wenigstens zum Teil wieder an das Fluid, welches an die Gasturbine geführt wird, übertragen. Gemäß diesen Ausführungsformen erfolgt also der Wärmeübertrag zwischen dem Wärmespeicher und dem an die Gasturbine geführten Fluid direkt bzw. indirekt. Eine direkte Wärmeübertragung zeichnet sich durch einen hohen Wirkungsgrad aus, wohingegen eine indirekte Wärmeübertragung besonders verfahrenssicher und wartungsfreundlich ist.

Gemäß einer weiteren besonders bevorzugten Ausführungsform der Erfindung ist vorgesehen, dass die Ladeschaltung eine Fluidwärmepumpe als Wärmeerzeugungseinrichtung aufweist, welche eine Verdichtereinheit sowie eine Expansionseinheit in fluidtechnischer Verschaltung miteinander aufweist. Insbesondere ist die Fluidwärmepumpe als Luftwärmepumpe ausgebildet, die gegenüber der Umgebung offen bzw. auch geschlossen ausgebildet sein kann. Bei offener Ausbildung kann Luft aus der Umgebung zur Verdichtereinheit geführt werden, wobei nach erfolgter Verdichtung und Expansion dieser Luft in der Expansionseinheit diese wiederum an die Umgebung zurück abgegeben werden kann. Zwischen Verdichtereinheit und Expansionseinheit ist zudem typischerweise noch ein Wärmetauscher geschaltet, welcher dazu ausgebildet ist, die bei der Kompression frei werdende Wärme gezielt abzuführen. Derartige Verdichtereinheiten wie auch Expansionseinheiten können bspw. von einer Gasturbine umfasst sein.

Ausführungsgemäß erfordert der Betrieb der Fluidwärmepumpe ein Arbeitsfluid, welches zunächst mittels der Verdichtereinheit komprimiert wird, wobei gleichzeitig das Fluid adiabatisch erwärmt wird. Diese Wärme kann mittels des Wärmetauschers abgeführt und in dem Wärmespeicher zeitlich zwischengespeichert werden. Anschließend wird das so thermisch behandelte Arbeitsfluid mittels der Expansionseinheit wieder entspannt, wobei sich das Fluid erneut abkühlt.

Die Fluidwärmepumpe kann bspw. von einer Gasturbine umfasst sein, welche zu Zeiten als Wärmepumpe betrieben wird, zu welchen kein elektrischer Strom erzeugt werden muss. Dabei kann die Verdichtereinheit sowie die Expansionseinheit von einem Generator angetrieben werden, der auch einen motorischen Betrieb erlaubt.

Entsprechend eines weiteren besonders vorteilhaften Aspekts der Erfindung ist vorgesehen, dass die Entladeschaltung eine Umgehungsleitung aufweist, welche dazu ausgebildet ist, in die Entladeschaltung eingebrachtes Fluid unter Umgehung des Wärmespeichers der Ansaugseite des Verdichters der Gasturbine zuzuführen. Bevorzugt mündet diese Umgehungsleitung also in eine Zufuhrleitung, welche das Fluid, welches durch die Wärme des Wärmespeichers konditioniert wurde, an die Gasturbine führt, und so für eine Mischung von thermisch konditioniertem und nicht thermisch konditioniertem Fluid sorgt. Die Umgehungsleitung ermöglicht also eine verbesserte Temperierung des der Gasturbine zugeführten Fluids, wobei die Temperatur des Fluids dem entsprechenden Betriebszustand der Gasturbine angepasst werden kann. Insoweit kann bspw. je nach Lastzustand der Gasturbine, insbesondere je nach Teillastzustand der Gasturbine, Fluid eines erhöhten bzw. eines verminderten Temperaturniveaus, je nach Mischungsverhältnis zwischen thermisch konditioniertem und nicht thermisch konditioniertem Fluid, dem Verdichter zugeleitet werden. Durch diese Anpassung des Temperaturniveaus an den Lastzustand kann der Wirkungsgrad bei Betrieb der Gasturbine über verschiedene Teillastzustände gemittelt verbessert werden.

Entsprechend einer weiteren bevorzugten Ausführungsform der Erfindung ist vorgesehen, dass die Ladeschaltung und die Entladeschaltung mit dem Wärmespeicher verschaltet sind, wobei der Wärmespeicher zwei Strömungskanäle, bevorzugt nur einen Strömungskanal aufweist. Die Strömungskanäle in dem Wärmespeicher können sowohl zur Wärmeaufnahme in den Wärmespeicher als auch zur Wärmeabgabe bei Entladung des Wärmespeichers dienen. In dem Fall, in welchem nur ein Strömungskanal in dem Wärmespeicher vorgesehen ist, kann der Wärmespeicher besonders kostengünstig und wartungsfreundlich gestaltet sein, da sowohl die Wärmeabgabe wie auch die Wärmeaufnahme in demselben Strömungskanal bzw. in den selben Strömungskanälen erfolgen kann.

Entsprechend einer ersten besonders bevorzugten Ausführungsform des erfindungsgemäßen Verfahrens ist vorgesehen, dass der Schritt des Überführens von thermisch konditioniertem Fluid an die Ansaugseite des Verdichters der Gasturbine dann erfolgt, insbesondere nur dann erfolgt, wenn die Gasturbine in Teillast betrieben wird. Ein Teillastbetrieb liegt typischerweise dann vor, wenn ein Lastbereich von 30 bis 95 % der Nennleistung erreicht ist. Durch das Zuführen von thermischer Wärme während eines solchen Teillastbetriebes kann der Wirkungsgrad des Betriebs gesteigert werden, wodurch auch die daran gekoppelten thermodynamischen Prozesse, etwa zur Stromerzeugung, vorteilhaft beeinflusst werden.

Gemäß einer Weiterführung dieser ausführungsgemäßen Idee ist vorgesehen, dass die Überführung von thermisch konditioniertem Fluid an die Ansaugseite des Verdichters derart gesteuert bzw. geregelt erfolgt, dass bei Verringerung der Teillastleistung der Gasturbine eine Erhöhung des Temperaturniveaus des thermisch konditionierten und an die Ansaugseite des Verdichters geleiteten Fluids eingestellt wird. Die Teillastleistung bezieht sich hierbei bevorzugt auf die elektrische Teillastleistung. Die Einstellung des Temperaturniveaus erfolgt folglich in Abhängigkeit der Teillastleistung der Gasturbine. Da sich bei veränderter Teillast auch der Wirkungsgrad des Betriebs verändert, kann durch eine geeignete Einstellung des Temperaturniveaus des an die Ansaugseite geleiteten Fluids eine angepasste Wirkungsgraderhöhung bei den verschiedenen Teillastzuständen vorgenommen werden. Insbesondere kann je nach Teillastzustand eine individuelle Einstellung des Temperaturniveaus erfolgen. Damit erhöht sich der Gesamtwirkungsgrad summiert über den Betrieb bei verschiedenen Teillastzuständen.

Gemäß einer Weiterführung dieser ausführungsgemäßen Idee ist vorgesehen, dass die Steuerung bzw. Regelung des Temperaturniveaus durch ein Mischen von thermisch konditioniertem und nicht thermisch konditioniertem Fluid vor Zuführen der Mischung an die Ansaugseite der Gasturbine erfolgt, wobei insbesondere das nicht thermisch konditionierte Fluid über eine Umgehungsleitung zur Gasturbine geführt wird. Die Mischung von thermisch konditioniertem Fluid und nicht thermisch konditioniertem Fluid vor Zuführung der Mischung an die Gasturbine ist eine einfache Maßnahme um das Temperaturniveau des Gemisches geeignet einzustellen.

Nachfolgend soll die Erfindung anhand einzelner Figuren im Detail näher erläutert werden. Hierbei sei darauf hingewiesen, dass die Figuren lediglich schematisch zu verstehen sind, wodurch keine Einschränkungen hinsichtlich der Ausführbarkeit der Erfindung bewirkt sein soll.

Weiterhin sei darauf hingewiesen, dass die in den Figuren erwähnten Merkmale für sich alleine wie auch in beliebiger Kombination miteinander beansprucht werden sollen, soweit die erfindungsgemäße Kombination die der Erfindung zugrundeliegende Aufgabe lösen kann.

Weiter ist darauf hinzuweisen, dass technische Merkmale, die mit gleichen Bezugszeichen versehen sind, gleiche technische Wirkungen aufweisen.

Hierbei zeigen:
- Figur 1: eine schematische Schaltansicht einer ersten Ausführungsform des erfindungsgemäßen Speichersystems 1;
- Figur 2: eine Ausführungsform des erfindungsgemäßen Verfahrens zum Betrieb eines solchen Speichersystems 1 in flussdiagrammatischer Darstellung;

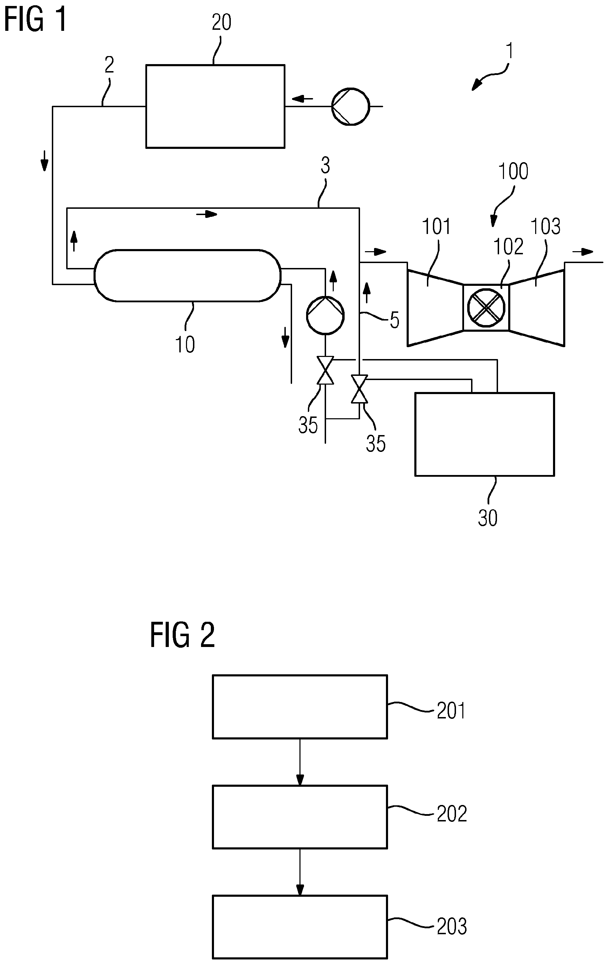

Figur 1 zeigt eine schematische Schaltansicht einer Ausführungsform des erfindungsgemäßen Gasturbinen gekoppelten Speichersystems 1, welches eine Ladeschaltung 2 sowie eine Entladeschaltung 3 aufweist, um einen Wärmespeicher 10 thermisch zu laden bzw. zu entladen. Die Ladeschaltung 2 weist insbesondere eine Wärmeerzeugungseinrichtung 20 auf, die bei elektrischem Betrieb etwa Wärme auf ein nicht weiter mit Bezugszeichen versehenes Arbeitsfluid übertragen kann, um diese Wärme zusammen mit dem Arbeitsfluid an den Wärmespeicher 10 zu führen. Bei thermischem Kontakt zwischen dem Arbeitsfluid und dem Wärmespeicher 10 kommt es zur Wärmeübertragung, wodurch der Wärmespeicher 10 thermisch aufgeladen werden kann. Erfindungsgemäß ist die Wärmeerzeugungseinrichtung 20 als Wärmepumpe ausgeführt. Eine solche hat vorzugsweise (vorliegend nicht gezeigt) eine Wärmezuleitung für Niedertemperaturwärmeströme, um diese bei der thermischen Konditionierung des Fluids für den Verdichter 101 zu nutzen.

Bei Entladen des Wärmespeichers 10 über die Entladeschaltung 3 wird ein ebenfalls nicht weiter mit Bezugszeichen versehenes Fluid an den Wärmespeicher 10 geleitet, um in diesem oder aus diesem thermische Energie aufnehmen zu können. Das so thermisch konditionierte thermische Fluid wird mittels der Entladeschaltung dem Verdichter 101 der Gasturbine 100 zugeführt. Durch die thermische Konditionierung kann insbesondere das Temperaturniveau während des Verbrennungsvorganges in der Brennkammer 102 erhöht werden, wodurch eine thermodynamische Wirkungsgradverbesserung insbesondere bei Teillastbetrieb resultiert.

Um das Temperaturniveau des an den Verdichter 101 geführten Fluids geeignet einstellen zu können, sieht die vorliegende Ausführungsform eine Umgehungsleitung 5 vor, die es erlaubt, Fluid, welches in der Entladeschaltung 3 geführt wird, an dem Wärmespeicher vorbeizuführen, um es anschließend mit thermisch konditioniertem Fluid zu mischen, bevor es dem Verdichter 101 der Gasturbine 100 zugeführt wird. Eine geeignete Mischung kann etwa durch zwei in die Entladeschaltung 3 eingefügte Stellmittel 35 erreicht werden, die mit einer Steuerungseinheit bzw. Regelungseinheit 30 geeignet eingestellt werden. Die Stellmittel 35 ermöglichen, die Flussmengen zu beeinflussen, welche der Umgehungsleitung 5 zugeführt werden bzw. zum Wärmeaustausch dem Wärmespeicher 10 zugeführt werden sollen. Besonders bevorzugt werden die Stellmittel 35 in Abhängigkeit des Teillastzustands der Gasturbine 100 eingestellt. Hierbei kann etwa dem Verdichter 101 mit abnehmender Teillastleistung der Gasturbine 100 zunehmend warmes Fluid zugeführt werden.

Figur 2 zeigt eine flussdiagrammatische Darstellung einer Ausführungsform des erfindungsgemäßen Verfahrens zum Betrieb eines vorab beschriebenen Speichersystems 1, welches folgende Schritte umfasst:
- Betreiben der Wärmeerzeugungseinrichtung (20) zur Erzeugung von Wärme und Überführen dieser Wärme wenigstens teilweise mittels der Ladeschaltung (2) an den Wärmespeicher (10) (erster Verfahrensschritt 201);
- Zwischenspeichern der Wärme in dem Wärmespeicher (10) (zweiter Verfahrensschritt 202);
- Überführen von mittels der Wärme aus dem Wärmespeicher (10) thermisch konditioniertem Fluid an die Ansaugseite des Verdichters (101) der Gasturbine (100) (dritter Verfahrensschritt 203);

Weitere Ausführungsformen ergeben sich aus den Unteransprüchen.

## Patentansprüche

1. Gasturbine mit einem gekoppelten Speichersystem (1) zur Speicherung thermischer Energie in einem Wärmespeicher (10), mit einer Ladeschaltung (2) und einer Entladeschaltung (3), wobei die Ladeschaltung (2) mit einer elektrisch betriebenen Wärmeerzeugungseinrichtung (20) versehen ist, die dazu ausgebildet ist, Wärme unter Nutzung von elektrischer Energie zu erzeugen, und wobei die Ladeschaltung (2) dazu ausgebildet ist, diese Wärme wenigstens teilweise an den Wärmespeicher (10) zu überführen, um sie darin zu speichern, und wobei die Entladeschaltung (3) dazu ausgebildet ist, mittels der Wärme aus dem Wärmespeicher (10) ein Fluid thermisch zu konditionieren, und um dieses dann an die Ansaugseite eines Verdichters (101) einer Gasturbine (100) zu führen,
**dadurch gekennzeichnet, dass**
die Ladeschaltung (2) eine Wärmepumpe als Wärmeerzeugungseinrichtung (20) aufweist.

2. Gasturbine mit einem gekoppelten Speichersystem (1) nach Anspruch 1,
**dadurch gekennzeichnet, dass**
die Wärmepumpe mit einer Wärmezuleitung für Niedertemperaturwärmeströme versehen ist, um einen Wärmestrom, der im Niedertemperaturbereich liegt, hinsichtlich seines Wärmegehalts zu konditionieren.

3. Gasturbine mit einem gekoppelten Speichersystem (1) nach Anspruch 1 oder 2,
**dadurch gekennzeichnet, dass**
die Entladeschaltung (3) dazu ausgebildet ist, das Fluid durch den Wärmespeicher (10) zur thermischen Konditionierung zu führen.

4. Gasturbine mit einem gekoppelten Speichersystem (1) nach einem der vorhergehenden Ansprüche,
**dadurch gekennzeichnet, dass**
die Entladeschaltung (3) eine Umgehungsleitung (5) aufweist, welche dazu ausgebildet ist, in die Entladeschaltung (3) eingebrachtes Fluid unter Umgehung des Wärmespeichers (10) der Ansaugseite des Verdichters (101) der Gasturbine (100) zuzuführen.

5. Gasturbine mit einem gekoppelten Speichersystem (1) nach einem der vorhergehenden Ansprüche,
**dadurch gekennzeichnet, dass**
die Ladeschaltung (2) und die Entladeschaltung (3) mit dem Wärmespeicher (10) verschaltet sind, wobei der Wärmespeicher (10) zwei Strömungskanäle, bevorzugt nur einen Strömungskanal aufweist.

6. Verfahren zum Betrieb einer Gasturbine mit einem gekoppelten Speichersystem (1), nach einem der vorhergehenden Ansprüche, welches folgende Schritte umfasst:
- Betreiben der Wärmeerzeugungseinrichtung (20) zur Erzeugung von Wärme und Überführen dieser Wärme wenigstens teilweise mittels der Ladeschaltung (2) an den Wärmespeicher (10);
- Zwischenspeichern der Wärme in dem Wärmespeicher (10);
- Überführen von mittels der Wärme aus dem Wärmespeicher (10) thermisch konditioniertem Fluid an die Ansaugseite des Verdichters (101) der Gasturbine (100);

7. Verfahren nach Anspruch 6,
**dadurch gekennzeichnet, dass**
der Schritt des Überführens von thermisch konditioniertem Fluid an die Ansaugseite des Verdichters (101) der Gasturbine (100) dann erfolgt, insbesondere nur dann erfolgt, wenn die Gasturbine (100) in Teillast betrieben wird.

8. Verfahren nach Anspruch 6 oder 7,
**dadurch gekennzeichnet, dass**
die Überführung von thermisch konditioniertem Fluid an die Ansaugseite des Verdichters (101) derart gesteuert bzw. geregelt erfolgt, dass bei Verringerung der Teillastleistung der Gasturbine (100) eine Erhöhung des Temperaturniveaus des thermisch konditionierten und an die Ansaugseite des Verdichters (101) geleiteten Fluids eingestellt wird.

9. Verfahren nach Anspruch 8,
**dadurch gekennzeichnet, dass**
die Steuerung bzw. Regelung des Temperaturniveaus durch ein Mischen von thermisch konditionierter und nicht thermisch konditioniertem Fluid vor Zuführen der Mischung an die Ansaugseite der Gasturbine (100) erfolgt, wobei insbesondere die nicht thermisch konditionierte Fluid über eine Umgehungsleitung (5) zur Gasturbine (100) geführt wird.

## Claims

1. Gas turbine having a coupled storage system (1) for storing thermal energy in a heat accumulator (10), having a charge circuit (2) and a discharge circuit (3), the charge circuit (2) being provided with an electrically operated heat generating device (20) which is configured to generate heat using electrical energy, and the charge circuit (2) being configured to transfer this heat at least in part to the heat accumulator (10), in order to store it therein, and the discharge circuit (3) being configured to thermally condition a fluid using the heat from the heat accumulator (10) in order then to feed said fluid to the intake side of a compressor (101) of a gas turbine (100),
**characterized in that**
the charge circuit (2) has a heat pump as heat generating device (20) .

2. Gas turbine having a coupled storage system (1) according to Claim 1,
**characterized in that**
the heat pump is provided with a heat supply for low temperature heat flows, in order to condition a heat flow in the low temperature range with regard to the heat content thereof.

3. Gas turbine having a coupled storage system (1) according to Claim 1 or 2,
**characterized in that**
the discharge circuit (3) is configured for conveying the fluid through the heat accumulator (10) for thermal conditioning.

4. Gas turbine having a coupled storage system (1) according to one of the preceding claims,
**characterized in that**
the discharge circuit (3) comprises a bypass line (5), which is configured to feed fluid introduced into the discharge circuit (3) to the intake side of the compressor (101) of the gas turbine (100) bypassing the heat accumulator (10).

5. Gas turbine having a coupled storage system (1) according to one of the preceding claims,
**characterized in that**
the charge circuit (2) and the discharge circuit (3) are interconnected with the heat accumulator (10), wherein the heat accumulator (10) comprises two flow ducts, preferably just one flow duct.

6. Method for operating a gas turbine having a coupled storage system (1), according to one of the preceding claims, which comprises the following steps:
- operating the heat generating device (20) for generating heat and transferring this heat at least in part by means of the charge circuit (2) to the heat accumulator (10);
- buffering the heat in the heat accumulator (10);
- transferring fluid thermally conditioned using the heat from the heat accumulator (10) to the intake side of the compressor (101) of the gas turbine (100).

7. Method according to Claim 6,
**characterized in that**
the step of transferring thermally conditioned fluid to the intake side of the compressor (101) of the gas turbine (100) takes place when the gas turbine (100) is operated under partial load, and in particular takes place only then.

8. Method according to Claim 6 or 7,
**characterized in that**
the transfer of thermally conditioned fluid to the intake side of the compressor (101) is open- or closed-loop controlled in such a way that, on reduction of the partial load output of the gas turbine (100), an increase in the temperature level of the thermally conditioned fluid passed to the intake side of the compressor (101) is established.

9. Method according to Claim 8,
**characterized in that**
open- or closed-loop control of the temperature level proceeds by mixing fluid that has been thermally conditioned and fluid that has not been thermally conditioned before feeding the mixture to the intake side of the gas turbine (100), wherein in particular the fluid that has not been thermally conditioned is fed to the gas turbine (100) via a bypass line (5).

## Revendications

1. Turbine à gaz ayant un système (1) accumulateur couplé pour l'accumulation d'énergie thermique dans un accumulateur (10) de chaleur, comprenant un circuit (2) de charge et un circuit (3) de décharge, le circuit (2) de charge étant pourvu d'un dispositif (20) de production de chaleur fonctionnant électriquement, qui est constitué pour produire de la chaleur en utilisant de l'énergie électrique, et dans laquelle le circuit (2) de charge est constitué pour transporter cette chaleur au moins en partie à l'accumulateur (10) de chaleur, pour l'y accumuler, et dans laquelle le circuit (3) de décharge est constitué pour, au moyen de la chaleur de l'accumulateur (10) de chaleur, conditionner thermiquement un fluide et pour l'envoyer ensuite au côté aspiration d'un compresseur (101) d'une turbine (100) à gaz,
**caractérisée en ce que**
le circuit (2) de charge a une pompe à chaleur comme dispositif (20) de production de chaleur.

2. Turbine à gaz ayant un système (1) accumulateur couplé suivant la revendication 1,
**caractérisée en ce que**
la pompe à chaleur est pourvue d'un conduit d'arrivée de chaleur pour des flux calorifiques à basse température, afin de conditionner, en ce qui concerne sa teneur en chaleur, un flux calorifique, qui est dans le domaine des basses températures.

3. Turbine à gaz ayant un système (1) accumulateur couplé suivant la revendication 1 ou 2,
**caractérisée en ce que**
le circuit (3) de décharge est constitué pour envoyer le fluide dans l'accumulateur (10) de chaleur pour le conditionnement thermique.

4. Turbine à gaz ayant un système (1) accumulateur couplé suivant l'une des revendications précédentes,
**caractérisée en ce que**
le circuit (3) de décharge a un conduit (5) de contournement, qui est constitué pour apporter du fluide introduit dans le circuit (3) de décharge, en contournant l'accumulateur (10) de chaleur, au côté aspiration du compresseur (101) de la turbine (100) à gaz.

5. Turbine à gaz ayant un système (1) accumulateur couplé suivant l'une des revendications précédentes,
**caractérisée en ce que**
le circuit (2) de charge et le circuit (3) de décharge sont reliés à l'accumulateur (10) de chaleur, l'accumulateur (10) de chaleur ayant deux conduits d'écoulement, de préférence seulement un conduit d'écoulement.

6. Procédé pour faire fonctionner une turbine à gaz ayant un système (1) d'accumulateur couplé suivant l'une des revendications précédentes, qui comprend les stades suivants :
- on fait fonctionner le dispositif (20) de production de chaleur pour produire de la chaleur et on transporte cette chaleur au moins en partie, au moyen du circuit (2) de charge, à l'accumulateur (10) de chaleur;
- on accumule en tampon la chaleur dans l'accumulateur (10) de chaleur;
- on envoie du fluide, conditionné thermiquement au moyen de la chaleur de l'accumulateur (10) de chaleur, au côté aspiration du compresseur (101) de la turbine (100) à gaz.

7. Procédé suivant la revendication 6,
**caractérisé en ce que**
le stade dans lequel on envoie du fluide conditionné thermiquement au côté aspiration du compresseur (101) de la turbine (100) à gaz s'effectue lorsque, notamment ne s'effectue que si, la turbine (100) à gaz fonctionne en charge partielle.

8. Procédé suivant la revendication 6 ou 7,
**caractérisé en ce que**
l'envoi de fluide conditionné thermiquement au côté aspiration du compresseur (101) est commandé ou réglé de manière à ce que, si la puissance en charge partielle de la turbine (100) à gaz diminue, il s'établisse une élévation du niveau de température du fluide conditionné thermiquement et envoyé au côté aspiration du compresseur (101).

9. Procédé suivant la revendication 8,
**caractérisé en ce que**,
la commande ou le réglage du niveau de température s'effectue par un mélange de fluide conditionné thermiquement et de fluide non conditionné thermiquement avant l'envoi du mélange au côté aspiration de la turbine (100) à gaz, le fluide non conditionné thermiquement étant envoyé à la turbine (100) à gaz par un conduit (5) de contournement.
